# EUROPEAN PATENT APPLICATION

(11) **EP 3 974 776 A1**
(43) Date of publication of application: **30.03.2022**
(21) Application number: 21198513.0
(22) Date of filing: 23.09.2021
(51) Int. Cl.: G01C 15/00

(54) **SURVEY APPARATUS AND SURVEY PROGRAM**

(30) Priority: 24.09.2020 JP 2020160224
(71) Applicant: TOPCON CORPORATION, Tokyo 174-8580 (JP)
(72) Inventor: SASAKI, Takeshi, Itabashi-ku, Tokyo 174-8580 (JP); KUMAGAI, Kaoru, Itabashi-ku, Tokyo 174-8580 (JP)
(74) Representative: Mewburn Ellis LLP

(57) **Abstract**

A survey apparatus includes: a measurement unit; an imaging unit; an attitude detecting unit being integrally provided with the imaging unit; and a calculation processing unit. The attitude detecting unit has an inclination sensor which detects horizontality and a relative inclination angle detecting portion which inclines the inclination sensor so that the inclination sensor detects horizontality and which detects an inclination angle of the measurement unit relative to the horizontality in a state where the inclination sensor detects horizontality, and the calculation processing unit executes control to ascertain a rough shape of the measurement object on the basis of the image including the measurement object having been imaged by the imaging unit and generate, on the basis of the rough shape, a scan pattern of the ranging light emitted by the measurement unit.

## Description

### BACKGROUND OF THE INVENTION

### 1. Field of the Invention

The present invention relates to a survey apparatus and a survey program which acquire three-dimensional information of a measurement object.

### 2. Description of the Related Art

Japanese Patent Application Laid-open No. 2017-223540 discloses a survey system provided with a laser scanner unit. The laser scanner unit rotates and radiates pulse laser light as ranging light and performs ranging for each pulse of the pulse laser light to acquire point cloud data. More specifically, the laser scanner unit irradiates a measurement object with pulse laser light as ranging light and receives reflected light of each pulse of the pulse laser light having been reflected by the measurement object, and, by measuring a distance to the measurement object and detecting an irradiation direction (a horizontal angle and a vertical angle) of the ranging light, the laser scanner unit acquires three-dimensional information of a large number of points of the measurement object. The three-dimensional information is also referred to as three-dimensional data and three-dimensional point cloud data.

The laser scanner unit is capable of executing a point cloud measurement of several hundreds of thousands of points per second, whereby a highly-efficient survey can be realized at an extremely high speed. In addition, the laser scanner unit rotates and radiates pulse laser light in a direction of a predetermined angle (for example, 360 degrees) and performs ranging for each pulse of the pulse laser light to acquire point cloud data. Therefore, the point cloud data acquired by the laser scanner unit has a grid structure.

For example, the survey apparatus provided with a laser scanner unit described in Japanese Patent Application Laid-open No. 2017-223540 performs ranging by rotating and radiating ranging light in a direction of, for example, 360 degrees and acquires three-dimensional data of a measurement object. Therefore, the three-dimensional data acquired by the survey apparatus includes three-dimensional data of not only the measurement object of which three-dimensional data is to be acquired but also a large number of points of objects that are present around the measurement object. Consequently, there is room for improvement in terms of reducing time required for a survey and time required for image processing after the survey, thereby improving efficiency of the survey.

### SUMMARY OF THE INVENTION

The present invention has been made in order to solve the problem described above and an object thereof is to provide a survey apparatus and a survey program which enable efficiency of a survey to be improved.

The object described above can be achieved by a survey apparatus according to the present invention, the survey apparatus including: a measurement unit which performs ranging by emitting ranging light toward a measurement object and receiving reflected ranging light from the measurement object; an imaging unit which has an imaging optical axis that is parallel to an emission optical axis of the ranging light, and which images an image including the measurement object; an attitude detecting unit which is integrally provided with the imaging unit; and a calculation processing unit, wherein the attitude detecting unit has an inclination sensor which detects horizontality and a relative inclination angle detecting portion which inclines the inclination sensor so that the inclination sensor detects horizontality and which detects an inclination angle of the measurement unit relative to the horizontality in a state where the inclination sensor detects horizontality, and the calculation processing unit executes control to ascertain a rough shape of the measurement object on the basis of the image including the measurement object having been imaged by the imaging unit and generate, on the basis of the rough shape, a scan pattern of the ranging light emitted by the measurement unit.

With the survey apparatus according to the present invention, the calculation processing unit first ascertains a rough shape of a measurement object on the basis of an image including the measurement object having been imaged by the imaging unit. In addition, based on the ascertained rough shape of the measurement object, the calculation processing unit executes control to generate a scan pattern of the ranging light emitted by the measurement unit. Therefore, the measurement unit performs ranging by scanning only a characteristic area that includes the measurement object of which three-dimensional data is to be acquired. In other words, the measurement unit does not scan excess areas that do not include the measurement object of which three-dimensional data is to be acquired and does not perform ranging of such excess areas. Consequently, the survey apparatus according to the present invention enables time required for a survey and time required for image processing after the survey to be reduced and enables efficiency of the survey to be improved.

In addition, compared to a case where ranging is performed by rotating and radiating the ranging light in a direction of 360 degrees, the measurement unit can perform ranging by scanning a characteristic area, which includes the measurement object of which three-dimensional data is to be acquired, at short intervals a plurality of times. Therefore, even when the image including the measurement object having been imaged by the imaging unit is, for example, a depth image having a depth, the survey apparatus according to the present invention is capable of defining a relatively fine grid structure with respect to the measurement object and performing a uniform survey in a characteristic area, which includes the measurement object of which three-dimensional data is to be acquired, while reducing a time required for the survey. Consequently, the survey apparatus according to the present invention enables accuracy of a survey to be improved.

With the survey apparatus according to the present invention, preferably, the calculation processing unit ascertains the rough shape by performing a principal component analysis of the image including the measurement object having been imaged by the imaging unit.

With the survey apparatus according to the present invention, the calculation processing unit ascertains a rough shape of the measurement object by performing a principal component analysis of the image including the measurement object having been imaged by the imaging unit. Therefore, the calculation processing unit can efficiently ascertain the rough shape of the measurement object while reducing information related to the measurement object and suppressing loss of the information related to the measurement object.

With the survey apparatus according to the present invention, preferably, the calculation processing unit executes control to update the scan pattern on the basis of the three-dimensional information of the measurement object acquired by the measurement unit by performing the ranging on the basis of the scan pattern.

With the survey apparatus according to the present invention, the calculation processing unit updates the scan pattern on the basis of the three-dimensional information of the measurement object acquired by the measurement unit. Therefore, the measurement unit is capable of emitting ranging light based on the scan pattern updated by the calculation processing unit and performing ranging by scanning only a characteristic area that includes the measurement object of which three-dimensional data is to be acquired. Consequently, the survey apparatus according to the present invention enables time required for a survey and time required for image processing after the survey to be further reduced and enables efficiency of the survey to be further improved.

The object described above can be achieved by a survey program according to the present invention, the survey program to be executed by a computer of a survey apparatus including: a measurement unit which performs ranging by emitting ranging light toward a measurement object and receiving reflected ranging light from the measurement object; an imaging unit which has an imaging optical axis that is parallel to an emission optical axis of the ranging light and which images an image including the measurement object; an attitude detecting unit which is integrally provided with the imaging unit and has an inclination sensor which detects horizontality and a relative inclination angle detecting portion which inclines the inclination sensor so that the inclination sensor detects horizontality and which detects an inclination angle of the measurement unit relative to the horizontality in a state where the inclination sensor detects horizontality; and a calculation processing unit, the survey program causing the computer to execute ascertaining a rough shape of the measurement object on the basis of the image including the measurement object having been imaged by the imaging unit and generating, on the basis of the rough shape, a scan pattern of the ranging light emitted by the measurement unit.

With the survey program according to the present invention, a computer of a survey apparatus is caused to execute the steps of ascertaining a rough shape of a measurement object on the basis of an image including the measurement object having been imaged by an imaging unit of the survey apparatus and generating, on the basis of the ascertained rough shape of the measurement object, a scan pattern of the ranging light emitted by the measurement unit of the survey apparatus. Therefore, the measurement unit performs ranging by scanning only a characteristic area that includes the measurement object of which three-dimensional data is to be acquired. In other words, the measurement unit does not scan excess areas that do not include the measurement object of which three-dimensional data is to be acquired and does not perform ranging of such excess areas. Consequently, the survey program according to the present invention enables time required for a survey and time required for image processing after the survey to be reduced and enables efficiency of the survey to be improved.

In addition, compared to a case where ranging is performed by rotating and radiating the ranging light in a direction of 360 degrees, the measurement unit can perform ranging by scanning a characteristic area, which includes the measurement object of which three-dimensional data is to be acquired, at short intervals a plurality of times. Therefore, even when an image including the measurement object having been imaged by the imaging unit is, for example, a depth image having a depth, the survey program according to the present invention is capable of causing a relatively fine grid structure to be defined with respect to the measurement object and causing a uniform survey in a characteristic area, which includes the measurement object of which three-dimensional data is to be acquired, to be executed while reducing a time required for the survey. Consequently, the survey program according to the present invention enables accuracy of a survey to be improved.

According to the present invention, a survey apparatus and a survey program which enable efficiency of a survey to be improved can be provided.

### BRIEF DESCRIPTION OF THE DRAWINGS

FIG. 1 is a schematic perspective view of a survey apparatus according to an embodiment of the present invention;
FIG. 2 is a schematic configuration diagram of the survey apparatus according to the present embodiment;
FIG. 3 is a plan view that represents a view in a direction of an arrow A represented in FIG. 2;
FIG. 4 is a plan view representing an attitude detecting unit according to the present embodiment;
FIG. 5 is a schematic configuration diagram of the attitude detecting unit according to the present embodiment;
FIGS. 6A to 6C are explanatory diagrams showing an effect of an optical axis deflecting unit according to the present embodiment;
FIG. 7 is a flow chart showing an outline of control by a calculation processing unit according to the present embodiment to generate a scan pattern of ranging light;
FIG. 8 is a flow chart showing a specific example of the control by the calculation processing unit according to the present embodiment to generate a scan pattern of ranging light;
FIGS. 9A to 9C are schematic views illustrating a scan pattern generated by the calculation processing unit according to the present embodiment; and
FIGS. 10A to 10C are schematic views illustrating a scan pattern generated by the calculation processing unit according to the present embodiment.

### DESCRIPTION OF THE PREFERRED EMBODIMENTS

Hereinafter, a preferred embodiment of the present invention will be described in detail with reference to the drawings.

Although the embodiment described hereinafter is a preferred specific example of the present invention and therefore involves various favorable technical limitations, it is to be understood that the scope of the present invention is by no means limited by the embodiment unless specifically noted otherwise hereinafter. It should also be noted that, in the drawings, similar components will be denoted by same reference signs and detailed descriptions thereof will be omitted when appropriate.

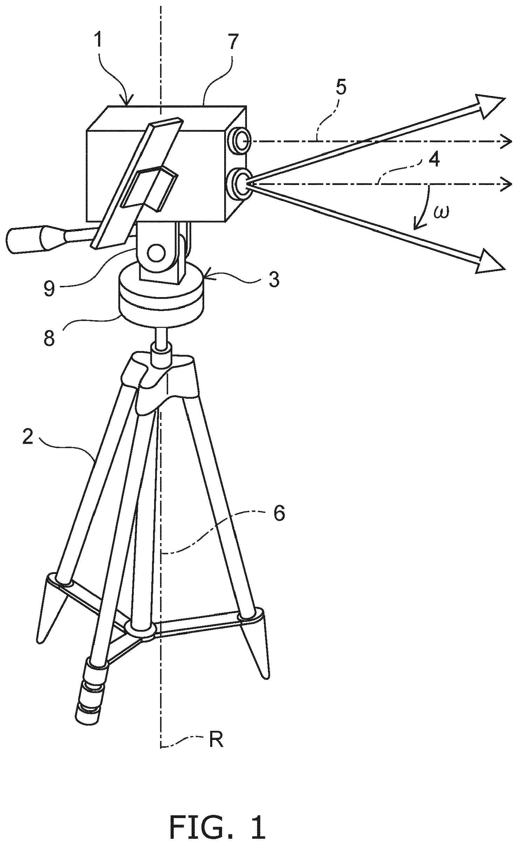

FIG. 1 is a schematic perspective view of a survey apparatus according to an embodiment of the present invention.

A survey apparatus 1 according to the present embodiment is provided via a base unit 3 on a tripod 2. A ranging optical axis 4 and an imaging optical axis 5 are parallel to each other. In addition, there is a known distance between the ranging optical axis 4 and the imaging optical axis 5.

The survey apparatus 1 is capable of measurement in a prism measurement mode in which a measurement object is a prism and measurement in a non-prism measurement mode in which the measurement object is a structure or the like and a prism is not used.

The base unit 3 has a protractor plate 8 which rotates in a horizontal direction and which is capable of detecting a rotational angle and a vertical rotation portion 9 which is capable of rotating in a vertical direction and which can be fixed at a predetermined angle. The survey apparatus 1 is attached to the vertical rotation portion 9.

The survey apparatus 1 has a machine reference point. The ranging optical axis 4, the imaging optical axis 5, and the like have known relationships with respect to the machine reference point of the survey apparatus 1. For example, the machine reference point is set at a center of rotation of the vertical rotation portion 9.

In a state where the ranging optical axis 4 is horizontal, the machine reference point is set so as to be positioned on a vertical line 6 that passes through an installation reference point R. A distance between the installation reference point R and the machine reference point of the survey apparatus 1 is measured by a scale or the like and is known.

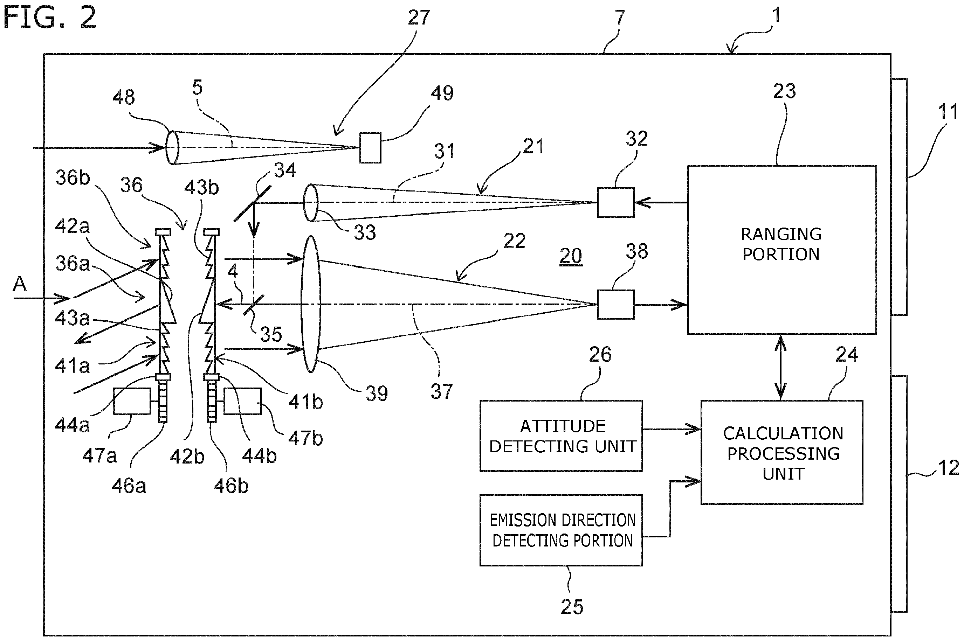

The survey apparatus 1 rotates in the vertical direction around the machine reference point and also rotates in the horizontal direction around the machine reference point. In addition, a vertical rotational angle is detected by an attitude detecting unit 26 (refer to FIG. 2) and a horizontal rotational angle is detected by the protractor plate 8.

FIG. 2 is a schematic configuration diagram of the survey apparatus according to the present embodiment.

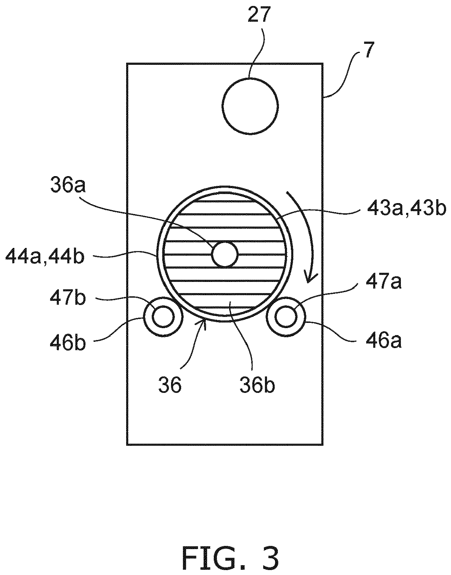

FIG. 3 is a plan view that represents a view in a direction of an arrow A represented in FIG. 2.

The survey apparatus 1 has, on a rear surface of an enclosure 7, a display portion 11 and an operating portion 12, and mainly has, inside the enclosure 7, a measurement unit 20 having the ranging optical axis 4, a calculation processing unit 24, an emission direction detecting portion 25 that detects an emission direction of ranging light, the attitude detecting unit 26 that detects an inclination of the survey apparatus 1 in two horizontal directions, an imaging unit 27 having the imaging optical axis 5, an optical axis deflecting unit 36 that deflects the ranging optical axis 4, and the like. Therefore, the measurement unit 20, the attitude detecting unit 26, the imaging unit 27, and the optical axis deflecting unit 36 are integrated. It should be noted that the display portion 11 may be a touch panel that doubles as the operating portion 12.

The measurement unit 20 is constituted by a ranging light emitting portion 21, a light-receiving portion 22, and a ranging portion 23.

The ranging light emitting portion 21 emits ranging light. The ranging light emitting portion 21 has an emission optical axis 31. A light-emitting element 32 such as a laser diode (LD) is provided on the emission optical axis 31. In addition, a projection lens 33 is provided on the emission optical axis 31.

In addition, a first reflecting mirror 34 as a deflecting optical member is provided on the emission optical axis 31. Moreover, a second reflecting mirror 35 as a deflecting optical member is arranged on a reception optical axis 37 so as to face the first reflecting mirror 34.

Due to the first reflecting mirror 34 and the second reflecting mirror 35, the emission optical axis 31 is made congruent with the ranging optical axis 4. The optical axis deflecting unit 36 is arranged on the ranging optical axis 4.

The light-receiving portion 22 receives reflected ranging light from the measurement object. The light-receiving portion 22 has the reception optical axis 37 that is parallel to the emission optical axis 31. The reception optical axis 37 is common to the ranging optical axis 4.

A light-receiving element 38 such as a photodiode (PD) is provided on the reception optical axis 37. An imaging lens 39 is also arranged on the reception optical axis 37. The imaging lens 39 focuses the reflected ranging light on the light-receiving element 38. The light-receiving element 38 receives the reflected ranging light and generates a light reception signal. The light reception signal is input to the ranging portion 23.

Furthermore, the optical axis deflecting unit 36 is arranged on an object side of the imaging lens 39 on the reception optical axis 37.

The ranging portion 23 controls the light-emitting element 32 and causes the light-emitting element 32 to emit a laser beam as the ranging light. The ranging optical axis 4 is deflected by the optical axis deflecting unit 36 (a ranging light deflecting portion 36a) so as to be directed toward a measurement point.

The reflected ranging light having been reflected by the measurement object enters the light-receiving portion 22 via the optical axis deflecting unit 36 (a reflected ranging light deflecting portion 36b) and the imaging lens 39. The reflected ranging light deflecting portion 36b re-deflects the ranging optical axis 4 having been deflected by the ranging light deflecting portion 36a so that the ranging optical axis 4 returns to its original state and causes the light-receiving element 38 to receive the reflected ranging light.

The light-receiving element 38 sends the light reception signal to the ranging portion 23. The ranging portion 23 performs ranging of the measurement point (a point irradiated by the ranging light) on the basis of the light reception signal from the light-receiving element 38.

The calculation processing unit 24 is constituted by an input/output control portion, a calculator (CPU), a storage portion, and the like. The storage portion stores programs such as a ranging program for controlling a ranging operation, a control program for controlling drive of motors 47a and 47b, an image program for performing image processing such as image matching, an input/output control program, and a direction angle calculation program for calculating direction angles (a horizontal angle and a vertical angle) of the ranging optical axis 4 based on a calculation result of an emission direction from the emission direction detecting portion 25. Furthermore, the storage portion stores measurement results such as ranging data and image data.

Examples of the storage portion include a semiconductor memory built into the survey apparatus 1 or the like. Other examples of the storage portion include various storage media connectable to the survey apparatus 1 such as a compact disc (CD), a digital versatile disc (DVD), a random access memory (RAM), a read only memory (ROM), a hard disk, and a memory card.

The ranging portion 23 may be realized by having the calculator execute a program stored in the storage portion. Alternatively, the ranging portion 23 may be realized by hardware or may be realized by a combination of hardware and software.

A program that is executed by a computer including the calculation processing unit 24 corresponds to the "survey program" according to the present invention. A "computer" as used herein is not limited to a personal computer and collectively refers to devices and apparatuses capable of realizing functions of the present invention using the program including arithmetic processing units and microcomputers included in information processing devices.

Next, the optical axis deflecting unit 36 will be described.

A pair of optical prisms 41a and 41b is arranged on the optical axis deflecting unit 36. The optical prisms 41a and 41b respectively have a disk shape and are orthogonally arranged on the reception optical axis 37 so as to overlap with, and be parallel to, each other. Using a Fresnel prism as each of the optical prisms 41a and 41b is preferable in terms of downsizing the apparatus.

A center portion of the optical axis deflecting unit 36 constitutes the ranging light deflecting portion 36a through which ranging light passes. Portions other than the center portion of the optical axis deflecting unit 36 constitute the reflected ranging light deflecting portion 36b.

The Fresnel prisms used as the optical prisms 41a and 41b are respectively constituted by prism elements 42a and 42b arranged in parallel to each other and a large number of prism elements 43a and 43b, and have a plate shape. The optical prisms 41a and 41b and the respective prism elements 42a, 42b and 43a, 43b have same optical characteristics.

The prism elements 42a and 42b constitute the ranging light deflecting portion 36a. The prism elements 43a and 43b constitute the reflected ranging light deflecting portion 36b.

The Fresnel prisms may be manufactured of optical glass or molded from an optical plastic material. Molding the Fresnel prisms from an optical plastic material enables the Fresnel prisms to be inexpensively manufactured.

The optical prisms 41a and 41b are each arranged so as to be individually rotatable around the reception optical axis 37. By independently controlling a rotational direction, a rotational amount, and a rotational speed of the optical prisms 41a and 41b, the ranging optical axis 4 of the emitted ranging light is deflected in an arbitrary deflection direction and the reception optical axis 37 of the received reflected ranging light is deflected so as to be parallel to the ranging optical axis 4.

Each of external shapes of the optical prisms 41a and 41b is a disk shape centered on the reception optical axis 37. Diameters of the optical prisms 41a and 41b are set in consideration of a spread of the reflected ranging light so as to enable the optical prisms 41a and 41b to acquire a sufficient amount of light.

A ring gear 44a is fitted to an outer circumference of the optical prism 41a. In addition, a ring gear 44b is fitted to an outer circumference of the optical prism 41b.

A drive gear 46a meshes with the ring gear 44a. The drive gear 46a is fastened to an output shaft of the motor 47a. A drive gear 46b meshes with the ring gear 44b. The drive gear 46b is fastened to an output shaft of the motor 47b. The motors 47a and 47b are electrically connected to the calculation processing unit 24.

As the motors 47a and 47b, a motor capable of detecting an angle of rotation or a motor that produces rotation corresponding to a drive input value such as a pulse motor is used. Alternatively, a rotational amount of the motor may be detected using a rotation detector that detects a rotational amount (a rotational angle) of the motor such as an encoder (not illustrated). Rotational amounts of the motors 47a and 47b are respectively detected by the emission direction detecting portion 25. Based on a detection result of the emission direction detecting portion 25, the motors 47a and 47b are individually controlled by the calculation processing unit 24.

The drive gears 46a and 46b and the motors 47a and 47b are provided at positions where interference with the ranging light emitting portion 21 is prevented such as below the ring gears 44a and 44b.

The projection lens 33, the ranging light deflecting portion 36a, and the like constitute a projection optical system. The reflected ranging light deflecting portion 36b, the imaging lens 39, and the like constitute a reception optical system.

The emission direction detecting portion 25 detects rotational angles of the motors 47a and 47b by counting drive pulses input to the motors 47a and 47b or detects rotational angles of the motors 47a and 47b based on a signal from an encoder.

Furthermore, the emission direction detecting portion 25 calculates rotational positions of the optical prisms 41a and 41b on the basis of the rotational angles of the motors 47a and 47b and calculates a deflection angle (deflection direction) and a direction of emission of the ranging light based on a refractive index and a rotational position of the ranging light deflecting portion 36a (in other words, the prism elements 42a and 42b). A calculation result is input to the calculation processing unit 24.

In the survey apparatus 1, the attitude detecting unit 26 detects an attitude (an inclination angle and an inclination direction) of the ranging portion 23 relative to the emission optical axis 31. A detection result is input to the calculation processing unit 24.

Based on the calculation result input from the emission direction detecting portion 25, the detection result input from the attitude detecting unit 26, and the like, the calculation processing unit 24 individually controls the motors 47a and 47b and executes control for generating a shape of a scan trajectory (in other words, a scan pattern) of the ranging light emitted by the measurement unit 20. Details of the control by the calculation processing unit 24 for generating the scan pattern will be provided later.

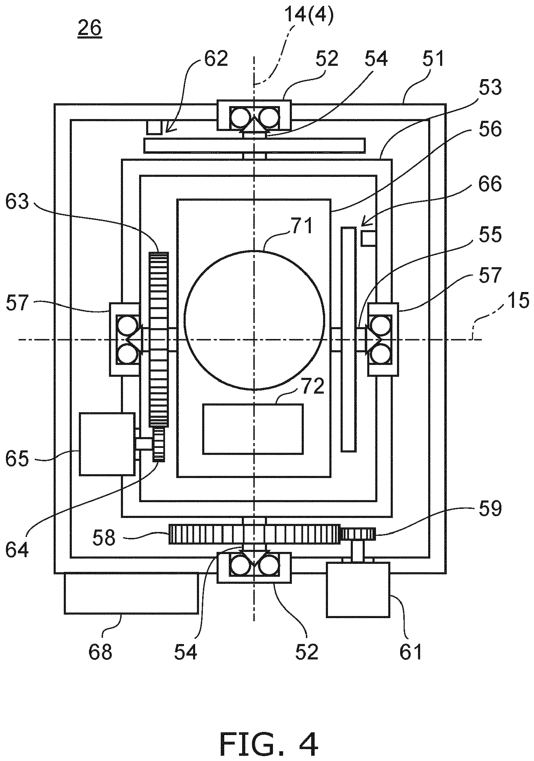

FIG. 4 is a plan view representing the attitude detecting unit according to the present embodiment.

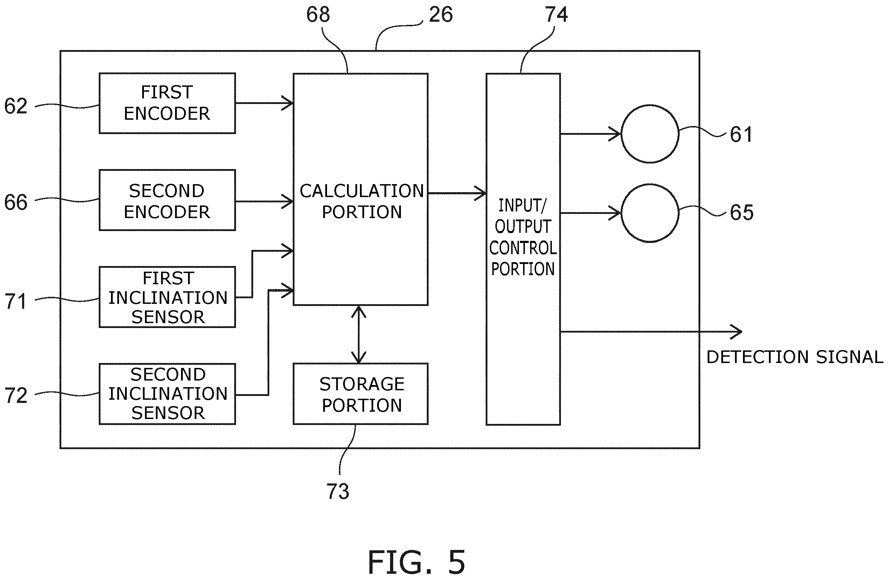

FIG. 5 is a schematic configuration diagram of the attitude detecting unit according to the present embodiment.

In the following description, up and down correspond to up and down in FIG. 4 and left and right correspond to left and right in FIG. 4.

An inner frame 53 with a rectangular frame shape is provided inside an outer frame 51 with a rectangular frame shape. An inclination detecting unit 56 is provided inside the inner frame 53.

Vertical shafts 54 are provided on upper and lower surfaces of the inner frame 53 so as to protrude therefrom. The vertical shafts 54 rotatably fit with bearings 52 provided on the outer frame 51. The vertical shafts 54 have a vertical axis 14. The inner frame 53 is rotatable by 360 degrees in a horizontal direction around the vertical shafts 54. The vertical axis 14 of the vertical shafts 54 is either congruent with or parallel to the ranging optical axis 4 or parallel to a horizontal reference line (not illustrated) that is perpendicular to the ranging optical axis 4.

The inclination detecting unit 56 is supported by a horizontal shaft 55. Both ends of the horizontal shaft 55 rotatably fit with bearings 57 provided on the inner frame 53. The horizontal shaft 55 has a horizontal axis 15 that is perpendicular to the vertical axis 14. The inclination detecting unit 56 is rotatable by 360 degrees in a vertical direction around the horizontal shaft 55. The horizontal axis 15 of the horizontal shaft 55 is either congruent with or parallel to the ranging optical axis 4 or parallel to the horizontal reference line that is perpendicular to the ranging optical axis 4.

In other words, the inclination detecting unit 56 is configured to be supported in two axial directions via a gimbal mechanism that is rotatable by 360 degrees with respect to the outer frame 51.

A first gear 58 is attached to one of the vertical shafts 54 such as a lower vertical shaft 54. A first drive gear 59 meshes with the first gear 58. In addition, a first motor 61 is provided on a lower surface of the outer frame 51. The first drive gear 59 is attached to an output shaft of the first motor 61.

A first encoder 62 is attached to the other of the vertical shafts 54. The first encoder 62 is configured so as to detect a rotational angle in the horizontal direction of the inner frame 53 with respect to the outer frame 51. In other words, with reference to FIG. 1, the first encoder 62 detects a flap angle ω.

A second gear 63 is attached to one end of the horizontal shaft 55. A second drive gear 64 meshes with the second gear 63. In addition, a second motor 65 is provided on a side surface (a left side surface in the illustration) of the inner frame 53. The second drive gear 64 is attached to an output shaft of the second motor 65.

A second encoder 66 is attached to the other end of the horizontal shaft 55. The second encoder 66 is configured so as to detect a rotational angle in the vertical direction of the inclination detecting unit 56 with respect to the inner frame 53.

The first encoder 62 and the second encoder 66 are electrically connected to a calculation portion 68. Detection results of the first encoder 62 and the second encoder 66 are input to the calculation portion 68.

The inclination detecting unit 56 has a first inclination sensor 71 and a second inclination sensor 72. The first inclination sensor 71 and the second inclination sensor 72 are electrically connected to the calculation portion 68. Detection results of the first inclination sensor 71 and the second inclination sensor 72 are input to the calculation portion 68.

The attitude detecting unit 26 will be further described with reference to FIG. 5.

In addition to the first encoder 62, the second encoder 66, the first inclination sensor 71, the second inclination sensor 72, the calculation portion 68, the first motor 61, and the second motor 65, the attitude detecting unit 26 is further provided with a storage portion 73 and an input/output control portion 74.

The storage portion 73 stores programs such as a calculation program for attitude detection and data such as calculation data.

The input/output control portion 74 drives the first motor 61 and the second motor 65 based on a control command output from the calculation portion 68 and outputs an inclination detection result calculated by the calculation portion 68 as a detection signal.

The first inclination sensor 71 detects horizontality with high accuracy and is constituted by, for example, an inclination detector that detects horizontality on the basis of a variation in a reflection angle of reflected light of detection light incident to a horizontal liquid surface or a bubble tube that detects an inclination on the basis of a positional variation of a bubble encapsulated therein. In addition, the second inclination sensor 72 detects an inclination variation with high responsiveness and is, for example, an acceleration sensor.

It should be noted that both the first inclination sensor 71 and the second inclination sensor 72 are capable of individually detecting an inclination in two axial directions of a rotational direction (inclination direction) detected by the first encoder 62 and a rotational direction (inclination direction) detected by the second encoder 66.

The calculation portion 68 calculates an inclination angle and an inclination direction based on detection results from the first inclination sensor 71 and the second inclination sensor 72, and further calculates an inclination angle of the survey apparatus 1 relative to vertical using a rotational angle of the first encoder 62 and a rotational angle of the second encoder 66 which correspond to the inclination angle and the inclination direction.

The inclination angle and the inclination direction are calculated by compositing the calculated rotational angle of the first encoder 62 and the calculated rotational angle of the second encoder 66. The inclination angle and the inclination direction correspond to an inclination angle and an inclination direction (relative inclination angle) of the enclosure 7 or, in other words, the measurement unit 20 relative to horizontality.

In this manner, the first motor 61, the second motor 65, the first encoder 62, the second encoder 66, and the calculation portion 68 constitute a relative inclination angle detecting portion.

It should be noted that the attitude detecting unit 26 is set such that, when the outer frame 51 is horizontally installed, the first inclination sensor 71 detects horizontality and an output of the first encoder 62 and an output of the second encoder 66 both indicate a reference position (rotational angle 0 degrees).

Hereinafter, an effect of the attitude detecting unit 26 will be described.

First, a case where an inclination is detected with high accuracy will be described.

When the attitude detecting unit 26 inclines, the first inclination sensor 71 outputs a signal in accordance with the inclination.

The calculation portion 68 calculates an inclination angle and an inclination direction based on the signal from the first inclination sensor 71, further calculates rotational amounts of the first motor 61 and the second motor 65 for making the inclination angle and the inclination direction zero based on a calculation result, and issues a drive command via the input/output control portion 74 for driving the first motor 61 and the second motor 65 by the rotational amounts.

The first motor 61 and the second motor 65 are driven so as to incline opposite to the calculated inclination angle and the calculated inclination direction. Rotational amounts (rotational angles) of the motors are detected by the first encoder 62 and the second encoder 66. Drive of the first motor 61 and the second motor 65 is stopped when the rotational angle equals the calculation result.

In this case, the inclination detecting unit 56 is horizontally controlled while the outer frame 51 and the inner frame 53 are inclined.

Therefore, in order to make the inclination detecting unit 56 horizontal, inclination angles by which the inner frame 53 and the inclination detecting unit 56 are inclined by the first motor 61 and the second motor 65 are detected on the basis of the rotational angles detected by the first encoder 62 and the second encoder 66.

The calculation portion 68 calculates an inclination angle and an inclination direction of the attitude detecting unit 26 relative to horizontality based on detection results of the first encoder 62 and the second encoder 66 when the first inclination sensor 71 detects horizontality. This calculation result indicates an attitude of the attitude detecting unit 26 after inclination.

Therefore, the inclination angle and the inclination direction calculated by the calculation portion 68 represent the inclination angle and the inclination direction of the survey apparatus 1 relative to horizontality.

The calculation portion 68 outputs, to the outside, the calculated inclination angle and the calculated inclination direction via the input/output control portion 74 as a detection signal of the attitude detecting unit 26.

In the attitude detecting unit 26, as is apparent from the structure shown in FIG. 4, the inclination detecting unit 56 and the inner frame 53 can rotate without limitations and the inclination detecting unit 56 and the inner frame 53 are both capable of rotating by 360 degrees or more. In other words, whatever attitude is assumed by the attitude detecting unit 26 (for example, even when the attitude detecting unit 26 is turned upside down), attitude detection can be performed in all directions.

When high responsiveness is required, attitude detection and attitude control are performed on the basis of a detection result of the second inclination sensor 72. Generally, detection accuracy of the second inclination sensor 72 is lower than the detection accuracy of the first inclination sensor 71.

With the survey apparatus 1 according to the present embodiment, by being equipped with the high-accuracy first inclination sensor 71 and the highly-responsive second inclination sensor 72, attitude control is performed on the basis of a detection result of the second inclination sensor 72 while the first inclination sensor 71 enables attitude detection with high accuracy.

In other words, on the basis of an inclination angle detected by the second inclination sensor 72, the first motor 61 and the second motor 65 are driven so that the inclination angle becomes 0 degrees. Furthermore, by continuing drive of the first motor 61 and the second motor 65 until the first inclination sensor 71 detects horizontality, an attitude can be detected with high accuracy. When a deviation is created between values of the first encoder 62 and the second encoder 66 when the first inclination sensor 71 detects horizontality (in other words, an actual inclination angle) and an inclination angle detected by the second inclination sensor 72, the inclination angle of the second inclination sensor 72 can be calibrated on the basis of the deviation.

Therefore, by acquiring, in advance, a relationship between a detected inclination angle of the second inclination sensor 72 and an inclination angle obtained on the basis of horizontal detection by the first inclination sensor 71 and detection results of the first encoder 62 and the second encoder 66, the inclination angle detected by the second inclination sensor 72 can be calibrated and accuracy of attitude detection with high responsiveness by the second inclination sensor 72 can be improved.

As described above, since an inclination angle and an inclination direction of the survey apparatus 1 in an installed state can be detected with high accuracy by the attitude detecting unit 26 and a measurement result can be corrected on the basis of the detection result, the survey apparatus 1 need not be leveled to attain horizontality. In other words, since a measurement with high accuracy can be performed in any installation state, the survey apparatus 1 need not be equipped with a leveling apparatus.

Next, the imaging unit 27 has the imaging optical axis 5. The imaging optical axis 5 is set so as to be parallel to the ranging optical axis 4 in a state where the optical axis deflecting unit 36 is not deflecting the ranging optical axis 4. An imaging lens 48 and an imaging element 49 are provided on the imaging optical axis 5.

An angle of view of the imaging unit 27 is set equal to or slightly larger than a range in which an optical axis can be deflected by the optical axis deflecting unit 36. For example, the angle of view of the imaging unit 27 is set to 5 degrees.

In addition, the imaging element 49 is an aggregate of pixels such as a CCD or a CMOS sensor. A position of each pixel of the imaging element 49 can be specified on a pixel element. For example, a position of each pixel of the imaging element 49 is specified in a coordinate system of which an origin is an optical axis of each camera.

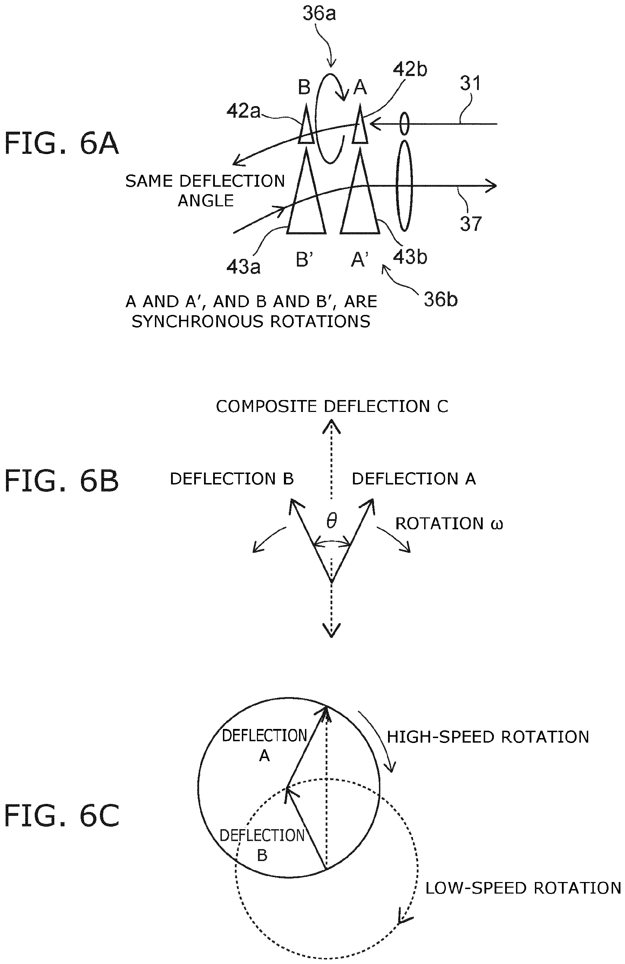

First, a measurement operation by the survey apparatus 1 will be described with reference to FIGS. 6A, 6B, and 6C.

FIGS. 6A to 6C are explanatory diagrams showing an effect of the optical axis deflecting unit according to the present embodiment.

In FIG. 6A, for the sake of brevity, the prism elements 42a and 42b and the prism elements 43a and 43b are shown separated from each other in the optical prisms 41a and 41b. In addition, the prism elements 42a and 42b and the prism elements 43a and 43b shown in FIG. 6A are in a state where a maximum deflection angle is obtained. Furthermore, a minimum deflection angle is obtained at a position where one of the optical prisms 41a and 41b has rotated by 180 degrees. As a result, a deflection angle of 0 degrees is obtained. An optical axis (the ranging optical axis 4) of an emitted laser beam is parallel to the emission optical axis 31.

Ranging light is emitted from the light-emitting element 32. The ranging light is made into a parallel luminous flux by the projection lens 33, passes through the ranging light deflecting portion 36a (the prism elements 42a and 42b), and emitted toward a measurement object or a measurement object area. In this case, by passing through the ranging light deflecting portion 36a, the ranging light is deflected and emitted in a necessary direction by the prism elements 42a and 42b.

Reflected ranging light having been reflected by the measurement object or in the measurement object area passes through and is incident to the reflected ranging light deflecting portion 36b (the prism elements 43a and 43b) and is focused on the light-receiving element 38 by the imaging lens 39.

Due to the reflected ranging light passing through the reflected ranging light deflecting portion 36b, an optical axis of the reflected ranging light is deflected by the prism elements 43a and 43b so as to become congruent with the reception optical axis 37 (FIG. 6A).

Due to a combination of rotational positions of the prism element 42a and the prism element 42b, a deflection direction and a deflection angle of the ranging light to be emitted can be arbitrarily changed.

In addition, by integrally rotating the prism element 42a and the prism element 42b by the motors 47a and 47b in a state where a positional relationship between the prism element 42a and the prism element 42b is fixed (in a state where a deflection angle obtained by the prism element 42a and the prism element 42b is fixed), a trajectory traced by the ranging light having passed through the ranging light deflecting portion 36a assumes a circle around the ranging optical axis 4.

Therefore, by rotating the optical axis deflecting unit 36 while emitting a laser beam by the light-emitting element 32, a scan can be performed with the ranging light so as to trace a circular trajectory.

It is needless to say that the reflected ranging light deflecting portion 36b integrally rotates with the ranging light deflecting portion 36a.

Next, FIG. 6B shows a case where the prism element 42a and the prism element 42b have been relatively rotated. If a deflection direction of an optical axis having been deflected by the prism element 42a is denoted by a deflection A and a deflection direction of the optical axis having been deflected by the prism element 42b is denoted by a deflection B, then a deflection of the optical axis by the prism elements 42a and 42b is a composite deflection C, where θ represents an angle difference between the prism elements 42a and 42b.

Therefore, a scan can be performed with the ranging light in a linear shape by rotating the optical axis deflecting unit 36 once every time the angle difference θ is changed.

Furthermore, as shown in FIG. 6C, by rotating the prism element 42b at a slower rotational speed than the rotational speed of the prism element 42a, the ranging light rotates while the angle difference θ gradually increases. Therefore, the scan trajectory of the ranging light assumes a spiral shape.

Moreover, by individually controlling rotational directions and rotational speeds of the prism element 42a and the prism element 42b, various scan states can be obtained such as arranging the scan trajectory of the ranging light in an irradiation direction centered on the emission optical axis 31 (a scan in a radial direction), arranging the scan trajectory of the ranging light in the horizontal direction and the vertical direction, or the like.

As a mode of measurement, performing ranging by fixing the optical axis deflecting unit 36 (the prism elements 42a and 42b) for each required deflection angle, ranging of a specific measurement point can be performed. Furthermore, executing ranging while changing the deflection angle of the optical axis deflecting unit 36 or, in other words, executing ranging while performing a scan with the ranging light enables ranging data with respect to a measurement point on the scan trajectory to be acquired.

In addition, an emission direction angle of each beam of ranging light can be detected based on the rotational angles of the motors 47a and 47b. Three-dimensional ranging data of the measurement object can be acquired by associating the emission direction angle and the ranging data with each other. Three-dimensional ranging data is also referred to as three-dimensional information, three-dimensional data, three-dimensional point cloud data, and the like.

Furthermore, an inclination of the emission optical axis 31 relative to horizontality can be detected by the attitude detecting unit 26. The ranging data can be corrected based on the inclination detected by the attitude detecting unit 26 to create ranging data with high accuracy.

Next, with the survey apparatus 1 according to the present embodiment, three-dimensional ranging data can be acquired and, at the same time, image data can be acquired.

When a measurement object is selected, the survey apparatus 1 is turned toward the measurement object so that the measurement object is captured by the imaging unit 27. An image acquired by the imaging unit 27 is displayed on the display portion 11.

Since the image acquired by the imaging unit 27 coincides with or approximately coincides with a measurement range of the survey apparatus 1, a measurer can readily visually specify the measurement range.

In addition, the ranging optical axis 4 and the imaging optical axis 5 are parallel to each other and have a known relationship. Therefore, in the image acquired by the imaging unit 27, the calculation processing unit 24 can cause a center of the image and the ranging optical axis 4 to coincide with each other. Furthermore, by detecting an emission direction angle of the ranging light, the calculation processing unit 24 can specify a measurement point on the image on the basis of the emission direction angle. Accordingly, three-dimensional data of a measurement point and an image can be readily associated with each other and the image acquired by the imaging unit 27 can be made into an image with three-dimensional data.

Next, control by the calculation processing unit 24 according to the present embodiment to generate a shape of a scan trajectory (a scan pattern) of ranging light will be described with reference to the drawings.

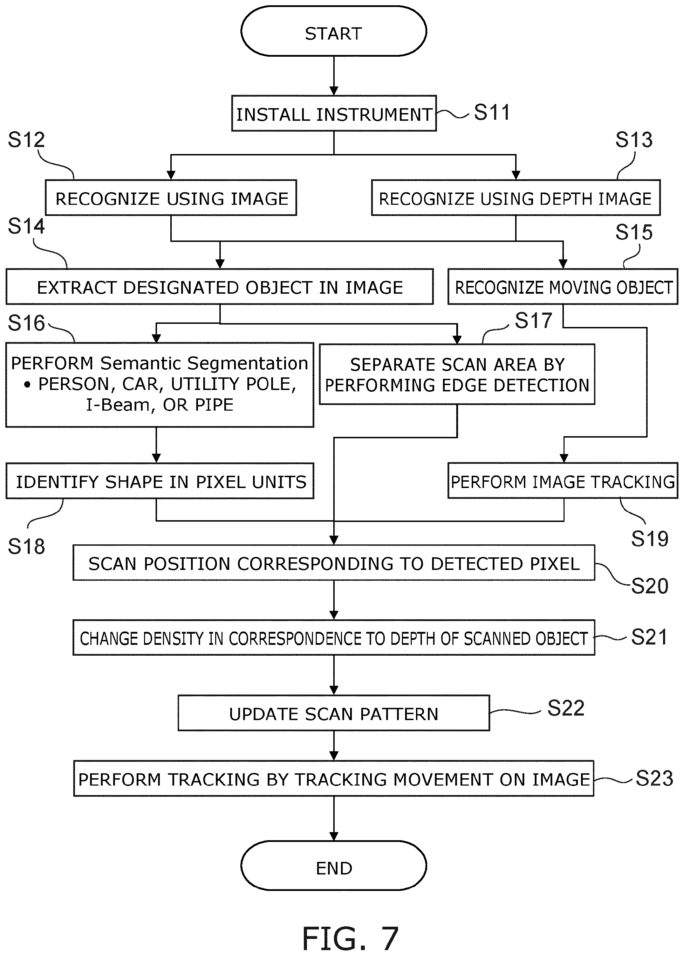

FIG. 7 is a flow chart showing an outline of control by the calculation processing unit according to the present embodiment to generate a scan pattern of the ranging light.

First, the calculation processing unit 24 ascertains a rough shape of a measurement object based on an image including the measurement object having been imaged by the imaging unit 27. In addition, based on the ascertained rough shape of the measurement object, the calculation processing unit 24 executes control to generate a scan pattern of the ranging light emitted by the measurement unit 20.

Describing control executed by the calculation processing unit 24 with reference to FIG. 7, first, in step S11, a measurer installs the instrument or, in other words, the survey apparatus 1. Next, in step S12, the measurer recognizes a measurement object according to an image having been imaged by the imaging unit 27. Alternatively, the image having been imaged by the imaging unit 27 may be a depth image having depth. In this case, in step S13, the measurer recognizes a measurement object according to a depth image having been imaged by the imaging unit 27.

Next, in step S14, the measurer extracts a designated object (in other words, the measurement object of which three-dimensional data is to be acquired) from the image having been imaged by the imaging unit 27. For example, when the display portion 11 is a touch panel and doubles as the operating portion 12, the measurer selects and designates a measurement object or a measurement object area from an image displayed on the display portion 11.

Next, when the measurement object of which three-dimensional data is to be acquired is extracted, in step S16, the calculation processing unit 24 executes known semantic segmentation. Examples of the measurement object include a person, a car, a utility pole, an I-beam (I-steel), and a pipe. In step S18 following step S16, the calculation processing unit 24 identifies a shape of the measurement object in pixel units of the image having been imaged by the imaging unit 27.

Alternatively, in step S17 following step S14, the calculation processing unit 24 may perform edge detection of the measurement object and separate a scan area.

Yet alternatively, in step S15 following step S12 and step S13, the measurer may recognize a moving object as the measurement object according to an image (including a depth image) having been imaged by the imaging unit 27. In other words, the measurement object of which three-dimensional data is to be acquired may be a moving object in addition to a still object such as a utility pole or a pipe. In step S19 following step S15, the calculation processing unit 24 tracks the moving object in the image having been imaged by the imaging unit 27.

In step S20 following step S18 and step S19, the calculation processing unit 24 executes control to scan a position corresponding to a detected pixel. In other words, the calculation processing unit 24 ascertains a rough shape of the measurement object by identifying a shape of the measurement object in pixel units of the image having been imaged by the imaging unit 27 in step S18 or by tracking a moving object in the image having been imaged by the imaging unit 27 in step S19. In addition, based on the ascertained rough shape of the measurement object, the calculation processing unit 24 generates a scan pattern of the ranging light emitted by the measurement unit 20. The calculation processing unit 24 can execute control to scan a position corresponding to a detected pixel by individually controlling the motors 47a and 47b on the basis of the generated scan pattern.

Next, in step S21, the calculation processing unit 24 changes measurement density (in other words, density of point cloud data) in correspondence to a depth of the scanned measurement object. For example, the calculation processing unit 24 changes measurement density in correspondence to the depth of the measurement object so that three-dimensional data in a measurement object area at a relatively distant position from the survey apparatus 1 becomes uniform instead of becoming relatively rough.

Next, in step S22, the calculation processing unit 24 updates the scan pattern based on the three-dimensional data of the measurement object acquired by the measurement unit 20 by performing ranging according to the scan pattern generated by the calculation processing unit 24.

Next, in step S23, the calculation processing unit 24 performs tracking by tracking a movement of the measurement object on the image having been imaged by the imaging unit 27.

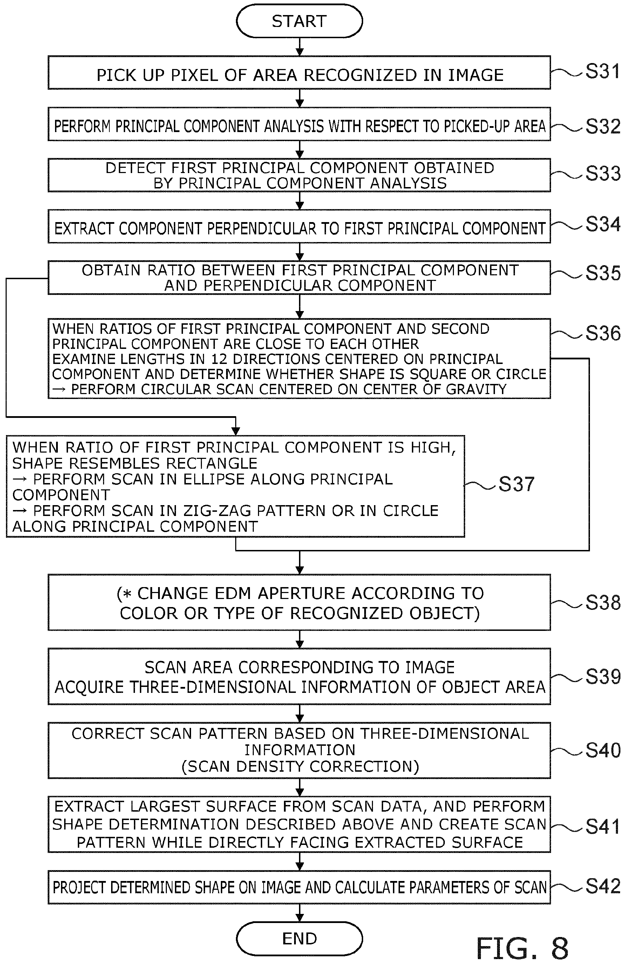

Next, control by the calculation processing unit 24 according to the present embodiment to generate a shape of a scan trajectory (a scan pattern) of ranging light will be further described with reference to FIG. 8 to FIGS. 10A to 10C.

FIG. 8 is a flow chart showing a specific example of the control by the calculation processing unit according to the present embodiment to generate a scan pattern of the ranging light.

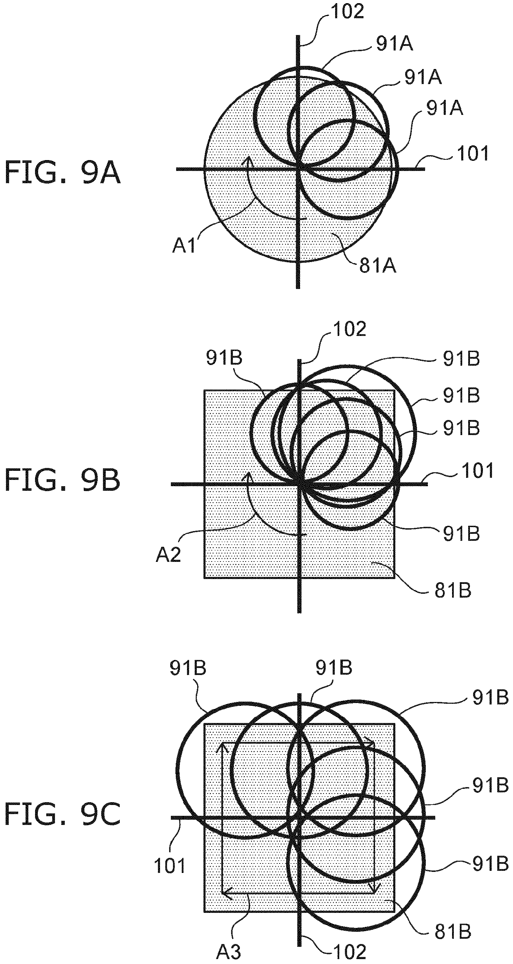

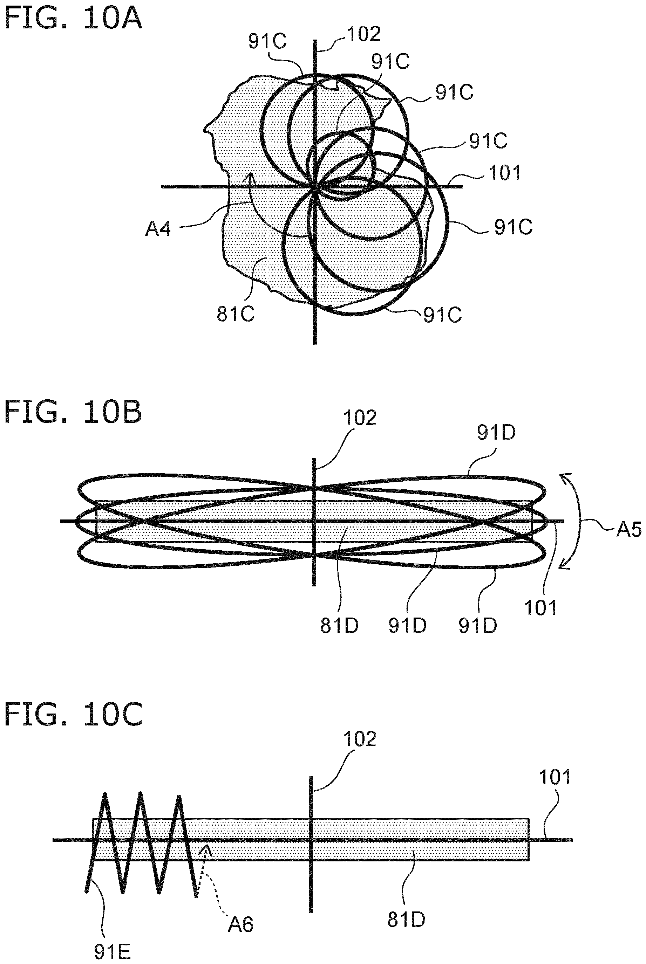

FIGS. 9A to 9C and FIGS. 10A to 10C are schematic views illustrating the scan pattern generated by the calculation processing unit according to the present embodiment.

First, in step S31 represented in FIG. 8, the measurer picks up a pixel of a measurement object area having been recognized in the image having been imaged by the imaging unit 27. For example, when the display portion 11 is a touch panel and doubles as the operating portion 12, the measurer selects and designates a measurement object or a measurement object area from an image displayed on the display portion 11. Step S31 represented in FIG. 8 is the same as, for example, step S14 described earlier with reference to FIG. 7.

Next, in step S32, the calculation processing unit 24 performs known principal component analysis with respect to the picked-up measurement object area. The principal component analysis according to the present embodiment is a known method ortechnique which enables information related to the measurement object and the measurement object area to be reduced while suppressing loss of the information related to the measurement object and the measurement object area.

Next, in step S33, the calculation processing unit 24 detects a first principal component 101 (refer to FIGS. 9A to 9C and FIGS. 10A to 10C) as a result of performing the principal component analysis. An axis of the first principal component 101 is an axis that maximizes distribution of data projected onto the axis. Next, in step S34, the calculation processing unit 24 extracts a component (in other words, a second principal component 102) (refer to FIGS. 9A to 9C and FIGS. 10A to 10C) that is perpendicular to the first principal component 101. An axis of the second principal component 102 is an axis that maximizes distribution of data projected onto the axis among axes perpendicular to the first principal component 101.

Next, in step S35, the calculation processing unit 24 compares ratios of the first principal component 101 and the perpendicular component (in other words, the second principal component 102) with each other. In other words, the calculation processing unit 24 compares ratios of a length of the axis of the first principal component 101 and a length of the axis of the second principal component 102 on the measurement object or in the measurement object area with each other.

When the ratio of the first principal component 101 to the second principal component 102 is smaller than a predetermined ratio or, in other words, when the ratios of the first principal component 101 and the second principal component 102 are relatively close to each other, in step S36, the calculation processing unit 24 ascertains the rough shape of the measurement object on the assumption that the shape of the measurement object resembles a square or a circle. In addition, the calculation processing unit 24 examines lengths of the measurement object in 12 directions centered on a principal component and determines whether the shape of the measurement object resembles a square or resembles a circle. Furthermore, based on the ascertained rough shape of the measurement object, the calculation processing unit 24 generates a scan pattern of the ranging light emitted by the measurement unit 20 and performs a circular scan centered on a center of gravity of the measurement object by individually controlling the motors 47a and 47b on the basis of the generated scan pattern.

For example, as represented in FIG. 9A, when the calculation processing unit 24 ascertains a rough shape of a measurement object 81A on the assumption that a shape of the measurement object resembles a circle, the calculation processing unit 24 generates a scan trajectory 91A (scan pattern) of the ranging light with a circular shape. In addition, by individually controlling the motors 47a and 47b as indicated by an arrow A1 represented in FIG. 9A, the calculation processing unit 24 performs a circular scan with the scan trajectory 91A of the ranging light with a circular shape being centered on the center of gravity of the measurement object 81A.

In addition, for example, as represented in FIG. 9B, when the calculation processing unit 24 ascertains a rough shape of a measurement object 81B on the assumption that a shape of the measurement object resembles a square, the calculation processing unit 24 generates a scan trajectory 91B (scan pattern) of the ranging light with a circular shape. In addition, by individually controlling the motors 47a and 47b as indicated by an arrow A2 represented in FIG. 9B, the calculation processing unit 24 performs a circular scan with the scan trajectory 91B of the ranging light with a circular shape being centered on the center of gravity of the measurement object 81B. In this case, the calculation processing unit 24 changes a diameter of the scan trajectory 91B of the ranging light in accordance with the "lengths in 12 directions" examined in step S36. Alternatively, by individually controlling the motors 47a and 47b as indicated by an arrow A3 represented in FIG. 9C, the calculation processing unit 24 performs a scan by moving the scan trajectory 91B of the ranging light with a circular shape along an edge of the measurement object 81B.

In addition, for example, as represented in FIG. 10A, when the calculation processing unit 24 ascertains a rough shape of a measurement object 81C on the assumption that a shape of the measurement object somewhat resembles a square, the calculation processing unit 24 generates a scan trajectory 91C (scan pattern) of the ranging light with a circular shape. In addition, by individually controlling the motors 47a and 47b as indicated by an arrow A4 represented in FIG. 10A, the calculation processing unit 24 performs a circular scan with the scan trajectory 91C of the ranging light with a circular shape being centered on the center of gravity of the measurement object 81C. In this case, the calculation processing unit 24 changes a diameter of the scan trajectory 91B of the ranging light in accordance with the "lengths in 12 directions" examined in step S36. Alternatively, by individually controlling the motors 47a and 47b in a similar manner to that described earlier with reference to FIG. 9C, the calculation processing unit 24 may perform a scan by moving the scan trajectory 91C of the ranging light with a circular shape along an edge of the measurement object 81C.

On the other hand, when the ratio of the first principal component 101 to the second principal component 102 is equal to or larger than the predetermined ratio or, in other words, when the ratios of the first principal component 101 and the second principal component 102 are relatively distant from each other, in step S37, the calculation processing unit 24 ascertains the rough shape of the measurement object on the assumption that the shape of the measurement object resembles a rectangle. Furthermore, based on the ascertained rough shape of the measurement object, the calculation processing unit 24 generates a scan pattern of the ranging light emitted by the measurement unit 20 and performs a scan of the measurement object by individually controlling the motors 47a and 47b on the basis of the generated scan pattern.

For example, as represented in FIG. 10B, when the calculation processing unit 24 ascertains a rough shape of a measurement object 81D on the assumption that a shape of the measurement object resembles a rectangle, the calculation processing unit 24 generates a scan trajectory 91D (scan pattern) of the ranging light with an elliptical shape along the principal component. In addition, by individually controlling the motors 47a and 47b as indicated by an arrow A5 represented in FIG. 10B, the calculation processing unit 24 performs a scan by rotating the scan trajectory 91D of the ranging light with an elliptical shape around the center of gravity of the measurement object 81D.

Alternatively, as represented in FIG. 10C, when the calculation processing unit 24 ascertains a rough shape of a measurement object 81D on the assumption that a shape of the measurement object resembles a rectangle, the calculation processing unit 24 generates a scan trajectory 91E (scan pattern) of the ranging light with a linear shape. In addition, by individually controlling the motors 47a and 47b as indicated by an arrow A6 represented in FIG. 10C, the calculation processing unit 24 performs a scan by moving the scan trajectory 91E of the ranging light with a linear shape in a zig-zag pattern along the principal component (the first principal component 101 in FIG. 10C).

Alternatively, when the calculation processing unit 24 ascertains a rough shape of a measurement object on the assumption that a shape of the measurement object resembles a rectangle, the calculation processing unit 24 may generate a scan trajectory (not illustrated) of the ranging light with a circular shape. In addition, by individually controlling the motors 47a and 47b, the calculation processing unit 24 may perform a scan by moving the scan trajectory of the ranging light with a circular shape along the principal component. Alternatively, when the calculation processing unit 24 ascertains a rough shape of a measurement object on the assumption that a shape of the measurement object resembles a rectangle, the calculation processing unit 24 may generate a scan trajectory (not illustrated) of the ranging light with a spiral shape. In addition, by individually controlling the motors 47a and 47b, the calculation processing unit 24 may perform a scan by moving the scan trajectory of the ranging light with a spiral shape along the principal component.

Next, in step S38 following step S36 and step S37, the calculation processing unit 24 changes an EDM aperture in accordance with at least one of a color and a type of the recognized measurement object. It should be noted that the calculation processing unit 24 need not necessarily execute step S38.

Next, in step S39, by individually controlling the motors 47a and 47b, the calculation processing unit 24 scans the measurement object area that corresponds to the image having been imaged by the imaging unit 27. In addition, the calculation processing unit 24 acquires three-dimensional information (three-dimensional data) of the measurement object area.

Next, in step S40, the calculation processing unit 24 corrects (updates) the scan pattern on the basis of the acquired three-dimensional information (three-dimensional data) of the measurement object area. In other words, the calculation processing unit 24 corrects (updates) the scan pattern based on the three-dimensional information (three-dimensional data) of the measurement object acquired by the measurement unit 20 by performing ranging according to the scan pattern generated by the calculation processing unit 24. For example, the calculation processing unit 24 corrects the scan density.

Next, in step S41, the calculation processing unit 24 extracts a largest surface among the measurement object area from the scan data and determines a shape of the measurement object while directly facing the extracted surface to create (generate) a scan pattern.

Next, in step S42, the calculation processing unit 24 projects the determined shape of the measurement object on the image and calculates parameters of the scan.

As described above, with the survey apparatus 1 according to the present embodiment, the calculation processing unit 24 first ascertains a rough shape of a measurement object based on an image including the measurement object having been imaged by the imaging unit 27. In addition, based on the ascertained rough shape of the measurement object, the calculation processing unit 24 executes control to generate a scan pattern of ranging light emitted by the measurement unit 20. Therefore, the measurement unit 20 performs ranging by only scanning a characteristic area that includes the measurement object of which three-dimensional data is to be acquired. In other words, the measurement unit 20 does not scan excess areas that do not include the measurement object of which three-dimensional data is to be acquired and does not perform ranging of such excess areas. Consequently, the survey apparatus 1 according to the present embodiment enables time required for a survey and time required for image processing after the survey to be reduced and enables efficiency of the survey to be improved.

In addition, compared to a case where ranging is performed by rotating and radiating the ranging light in a direction of 360 degrees, the measurement unit 20 can perform ranging by scanning a characteristic area that includes the measurement object of which three-dimensional data is to be acquired at short intervals a plurality of times. Therefore, even when an image including the measurement object having been imaged by the imaging unit 27 is, for example, a depth image having a depth, the survey apparatus 1 according to the present embodiment is capable of defining a relatively fine grid structure with respect to the measurement object and performing a uniform survey in a characteristic area that includes the measurement object of which three-dimensional data is to be acquired while reducing a time required for the survey. Consequently, the survey apparatus 1 according to the present embodiment enables accuracy of a survey to be improved.

In addition, the calculation processing unit 24 ascertains a rough shape of the measurement object by performing a principal component analysis of the image including the measurement object having been imaged by the imaging unit 27. Therefore, the calculation processing unit 24 can efficiently ascertain the rough shape of the measurement object while reducing information related to the measurement object and suppressing loss of the information related to the measurement object.

Furthermore, the calculation processing unit 24 updates the scan pattern based on the three-dimensional information of the measurement object acquired by the measurement unit 20. Therefore, the measurement unit 20 is capable of emitting ranging light based on the scan pattern updated by the calculation processing unit 24 and performing ranging by only scanning a characteristic area that includes the measurement object of which three-dimensional data is to be acquired. Consequently, the survey apparatus 1 according to the present embodiment enables time required for a survey and time required for image processing after the survey to be further reduced and enables efficiency of the survey to be further improved.

An embodiment of the present invention has been described above. However, it is to be understood that the present invention is not limited to the embodiment described above and that various modifications can be made without departing from the scope of the appended claims. The configurations of the embodiment described above can be partially omitted or arbitrarily combined in manners that differ from those described above.

## Claims

1. A survey apparatus comprising:
a measurement unit which performs ranging by emitting ranging light toward a measurement object and receiving reflected ranging light from the measurement object;
an imaging unit which has an imaging optical axis that is parallel to an emission optical axis of the ranging light, and which images an image including the measurement object;
an attitude detecting unit which is integrally provided with the imaging unit; and
a calculation processing unit, wherein
the attitude detecting unit has an inclination sensor which detects horizontality and a relative inclination angle detecting portion which inclines the inclination sensor so that the inclination sensor detects horizontality and which detects an inclination angle of the measurement unit relative to the horizontality in a state where the inclination sensor detects horizontality, and
the calculation processing unit executes control to ascertain a rough shape of the measurement object on the basis of the image including the measurement object having been imaged by the imaging unit and generate, on the basis of the rough shape, a scan pattern of the ranging light emitted by the measurement unit.

2. The survey apparatus according to claim 1, wherein the calculation processing unit ascertains the rough shape by performing a principal component analysis of the image including the measurement object having been imaged by the imaging unit.

3. The survey apparatus according to claim 1 or 2, wherein the calculation processing unit executes control to update the scan pattern on the basis of the three-dimensional information of the measurement object acquired by the measurement unit by performing the ranging on the basis of the scan pattern.

4. A survey program to be executed by a computer of a survey apparatus including:
a measurement unit which performs ranging by emitting ranging light toward a measurement object and receiving reflected ranging light from the measurement object;
an imaging unit which has an imaging optical axis that is parallel to an emission optical axis of the ranging light, and which images an image including the measurement object;
an attitude detecting unit which is integrally provided with the imaging unit and has an inclination sensor which detects horizontality and a relative inclination angle detecting portion which inclines the inclination sensor so that the inclination sensor detects horizontality and which detects an inclination angle of the measurement unit relative to the horizontality in a state where the inclination sensor detects horizontality; and
a calculation processing unit,
the survey program causing the computer to
execute ascertaining a rough shape of the measurement object on the basis of the image including the measurement object having been imaged by the imaging unit and generating, on the basis of the rough shape, a scan pattern of the ranging light emitted by the measurement unit.
